Europäisches Patentamt

European Patent Office

Office européen des brevets

(19)

(11) **EP 0 686 552 B2**

(12) ## NEUE EUROPÄISCHE PATENTSCHRIFT

(45) Veröffentlichungstag und Bekanntmachung des Hinweises auf die Entscheidung über den Einspruch:
**24.03.2004   Patentblatt 2004/13**

(45) Hinweis auf die Patenterteilung:
**27.10.1999   Patentblatt 1999/43**

(21) Anmeldenummer: **95107647.0**

(22) Anmeldetag: **19.05.1995**

(51) Int Cl.⁷: **B62M 25/04**, B62K 23/04

(54) **Drehgriff zur Betätigung von Fahrradgangschaltungen**

A twistgrip for operating the gears of a bicycle

Poignée tournante pour le changement de vitesse de bicyclette

(84) Benannte Vertragsstaaten:
**AT BE CH DE DK ES FR GB IT LI NL PT**

(30) Priorität: **10.06.1994   DE 4420273**

(43) Veröffentlichungstag der Anmeldung:
**13.12.1995   Patentblatt 1995/50**

(73) Patentinhaber: **SUNRACE STURMEY-ARCHER INC.**
**Taiwan R.O.C. (TW)**

(72) Erfinder:
• **Heymer, Arne, Dipl.-Ing.**
  **D-50374 Erftstadt (DE)**

• **von der Osten-Sacken, Ernst, Prof. Dr.-Ing.**
  **D-52159 Roetgen (DE)**

(74) Vertreter: **Nau, Walter, Dipl.-Ing.**
**Johann-Pullem-Strasse 8**
**50999 Köln (DE)**

(56) Entgegenhaltungen:
| | |
|---|---|
| EP-B1- 0 068 911 | DE-A- 3 036 111 |
| DE-C2- 3 518 220 | FR-A- 829 283 |
| FR-A- 1 499 803 | FR-A- 2 673 594 |
| GB-A- 349 765 | US-A- 5 241 877 |

**Beschreibung**

Die Erfindung betrifft eine Schaltvorrichtung mit drehbarem Griff zur Betätigung von Fahrradgangschaltungen nach dem Oberbegriff des Patentanspruchs 1.

Eine derartige gattungsbildende Vorrichtung ist aus der GB- 349,765 C bekannt. Dabei ist die Anlenkung der Längsführung an dem Halter, z.B. Fahrradlenker, schwenkbar um eine Achse senkrecht zur Achse des Griffs ausgeführt. Dies erfolgt entweder über einen Nippel oder über eine zylindrische bzw. kugelförmige Abstützung mit einem dazu passenden Stützelement. Dadurch führt die Längsführung bei Drehbewegung des Griffs eine Schwenkbewegung um ihre Abstützung aus, die im Wesentlichen der Schwenkbewegung des Zugseiles innerhalb des Griffs entspricht. Diese Schwenkbewegung ist verhältnismäßig groß und kann von einer achsparallelen Ausrichtung zum Fahrradlenker bis zu einem Winkel von ca. 45° dazu reichen. Je nach Anlenkung der Längsführung kann bei Drehbewegung des Griffes auch ein Abstehen des Zugmittels in tangentialer Richtung erfolgen.

Ein Verschwenken der Längsführung und damit auch des ganzen Zugmittels kann zu Kollisionen mit anderen Bauteilen, z.B. einem Bremshebel, führen und dessen Betätigung behindern. Des Weiteren kann eine Verstellung der Längshülse und des Zugmittels durch äußere Krafteinwirkungen, z.B. beim Lenken des Fahrrades, eine unbeabsichtigte und ungewollte Schaltung von Gängen verursachen.

Eine aus der FR-A-2 673 594 bekannte Einrichtung dient zur Betätigung einer Bremseinrichtung für ein Fahrrad und ermöglicht die Bremswirkung stufenweise einzustellen. Dazu ist ein Sperrklinkensystem vorgesehen, das einen Sperrbolzen aufweist, der mit verschiedenen Rasterstufen auf einem Fortsatz des Griffes zusammenwirkt.

Darüberhinaus sind Drehschaltgriffe zur Betätigung von Fahrradgangschaltungen bekannt, die gegen eine im Schaltwerk angebrachte Feder an einem Zugmittel ziehen. Hierbei werden zwei Prinzipien gewählt:

In einer Ausführung wird ein Seilzug auf einen über den Fahrradlenker geschobenen Wickelkörper schlupffrei aufgewickelt (EP-A-0 423 779 ). Durch den Fahrradlenker ist jedoch ein Mindestdurchmesser und damit ein Mindestumfang des Wickelkörpers gegeben. Da der Seilzug auf diesem Umfang aufgewickelt wird, ergeben sich bereits durch kleine Drehbewegungen des Wickelkörpers relativ große Längsbewegungen des Seilzugs, was dem Wunsch nach präzisem Schalten entgegenwirkt.

In einer anderen Ausführung wird ein Seilzug, der an dem nicht drehbaren Teil des Schaltgriffs befestigt ist, in einer Schlinge um einen drehbaren Nocken gelegt. Durch Drehen dieses Nockens wird die Seilzugschlinge geweitet (US-A-5 102 372 und EP-A-0 575 560). Damit wird auch bei größeren Drehbewegungen eine relativ kleine Linearbewegung erreicht. Nachteil dieser Lösung ist der große Umschlingungswinkel des Seilzugs um den Nocken, der eine relativ große Reibung zwischen dem Nocken und dem Seilzug bewirkt.

Der Erfindung liegt im Wesentlichen die Aufgabe zugrunde, möglichst einfach durch Drehbewegung eines Griffes um einen Fahrradlenker eine relativ kleine Längsbewegung an einem Zugmittel, z.B. einem Seilzug, zu erreichen aber dabei gleichzeitig große Reibkräfte zu vermeiden.

Gelöst wird die Aufgabe der Erfindung durch die kennzeichnenden Merkmale des Patentanspruchs 1.

Durch die erfindungsgemäßen Merkmale wird erreicht, daß beim Verdrehen des Griffes sich das Zugmittel zwischen der Austrittsöffnung der Längsführung und der Befestigungsstelle am Griff entsprechend der Kraftentfaltung frei einstellen kann. Die Längsführung ist zweckmäßigerweise an einem ringförmigen Körper befestigt, der an dem Fahrradlenker, z.B. mittels einer Radialschraube festgelegt ist. Der Drehgriff stützt sich seinerseits auf einer Schulter an dem ringförmigen Körper, an dem die Längsführung befestigt ist, ab, da bei der Einwirkung von Kräften auf das Zugmittel eine Axialkraftkomponente auf den Griff wirkt. Das Zugmittel kann sich gemäß dem Grundgedanken der Erfindung auf dem Fahrradlenker oder einer diesen umgebenden Hülse frei bewegen und entsprechend der Krafteinwirkung in seiner Richtung einstellen. Die Hülse kann an dem ringförmigen Körper, an dem die Längsführung angeordnet ist, befestigt oder einstückig mit ihr ausgebildet sein. Sie kann auch als loses Bauteil auf dem Fahrradlenker angeordnet sein. Sie kann schließlich aber auch einstückig mit dem Griff ausgebildet oder an diesem befestigt sein. Es ist vorteilhaft, wenn die Hülse eine möglichst glatte Oberfläche aufweist, so daß nur geringe Reibungskräfte zwischen dem Zugmittel und der Hülse entstehen. Der Drehgriff kann, je nach dem ob eine Hülse vorgesehen ist und wie diese ausgebildet ist, radial auf dem Fahrradlenker und ggfs. auf einer Fortsetzung des ringförmigen Teils, an dem die Längsführung befestigt ist, abgestützt sein. Eine Abstützung des Griffes ist aber auch auf der Mantelfläche des Hülse möglich, wobei in dem Bereich, in dem das Zugmittel sich auf der Hülse bewegt, eine Aussparung angeordnet ist, die die freie Beweglichkeit des Zugmittels gewährleistet, im übrigen aber eine Abstützung für den Griff darstellt. Auch wenn die Hülse am Griff befestigt ist, kann eine entsprechende Aussparung, die dann allerdings in ihrer Formgebung der andersartigen Kinematik angepaßt ist, vorgesehen sein.

Zur weiteren Erläuterung der Erfindung wird auf die Zeichnungen verwiesen, in denen ein Ausführungsbeispiel der Erfindung vereinfacht dargestellt ist. Es zeigen:

Fig. 1: Eine Seitenansicht eines Drehgriffes mit Teilschnitten durch den Griff, die Längsführung und den ringförmigen Körper,

Fig. 2: eine Seitenansicht ähnlich Fig. 1, mit Längsschnitt durch einen modifizierten Drehgriff in der oberen Hälfte und Teilschnitt durch den ringförmigen Körper in der unteren Hälfte,

Fig. 3: eine Ansicht gemäß der Linie III-III in Fig. 2 mit Teilschnitten durch den ringförmigen Körper, die Rastfeder, das Rastsegment, das Widerlager und den Griff,

Fig. 4: eine Draufsicht auf den Drehgriff gemäß Fig. 2 und

Fig. 5: eine Explosionsdarstellung des Drehgriffes gemäß Fig. 2.

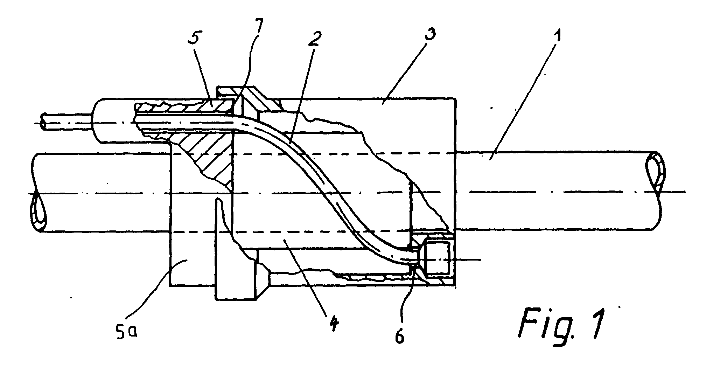

In den Figuren 1 bis 5 wird, soweit im einzelnen dargestellt, mit 2 ein Zugmittel bezeichnet, das an einem relativ zum Fahrradlenker 1 drehbaren Griff 3 befestigt ist. Das Zugmittel 2 wird ähnlich einer Schraubenlinie um eine den Fahrradlenker 1 ummantelnde Hülse 4 gelenkt und durch eine Längsführung 5 geführt, die an einem ringförmigen Körper 5a befestigt ist, der seinerseits am Fahrradlenker 1 fixiert ist. Beim Drehen des Griffs 3 wird so die Befestigungsstelle 6 des Zugmittels 2 am Griff 3 auf einer Kreisbahn um den Lenker 1 geführt und dadurch das Zugmittel 2 in seiner Längsführung 5 bewegt. Durch Wahl eines hinreichend großen Abstandes in Richtung der Drehachse des Griffs 3 zwischen der Kreisbahn der Befestigungsstelle 6 und der Austrittsöffnung 7 des Zugmittels 2 aus der Längsführung 5 wird erreicht, daß der Weg der Befestigungsstelle 6 entlang der Kreisbahn deutlich größer ist als der Weg des Zugmittels 2 an der Austrittsöffnung 7 aus seiner Längsführung 5. Der Abstand zwischen Befestigungsstelle 6 und Austrittsöffnung 7 entlang der Drehachse beträgt vorzugsweise 50 mm. Von Bedeutung für die Umsetzung der Drehbewegung in eine Zug-Schubbewegung am Zugmittel 2 ist auch der Durchmesser der Hülse 4 bzw. des Fahrradlenkers 1. Die Hülse hat vorzugsweise einen Durchmesser von 25 mm.

Das Verhältnis dieser Wege zueinander hängt unter anderem von dem genutzten Drehwinkelbereich ab. Wird die Befestigungsstelle 6 des Zugmittels 2 beim Beginn der Betätigung des Drehgriffs, (wenn das Zugmittel 2 am Beginn der Zugbewegung ist), auf einer zur Drehachse des Griffs 3 parallelen Linie durch die Austrittsöffnung 7 angeordnet ($\alpha_0$= 0°), so ergibt sich zunächst beim Drehen des Griffs 3 nur eine extrem kleine Längsbewegung des Zugmittels 2. Wird jedoch für den Beginn der Betätigung ein Winkel $\alpha_0$ deutlich größer 0° gewählt, die Befestigungsstelle 6 also bereits zu Beginn der Betätigung des Drehgriffs verdreht angeordnet, so ergibt sich bereits zu Beginn der Betätigung eine größere Längsbewegung des Zugmittels 2 und eine bessere Linearität der Umsetzung der Drehbewegung des Griffs 3 in die Längsbewegung des Zugmittels 2. Die gewünschte Übersetzung ergibt sich, wenn die Befestigungsstelle 6 des Zugmittels 2 bereits beim Beginn der Betätigung des Schaltgriffs gegenüber der Austrittsöffnung 7 um $\alpha_0 \sim 104°$ in der Betätigungsrichtung um die Drehachse des Griffs 3 verdreht ist und durch Drehen des Griffs 3 um etwa 135° bis zum Erreichen von $\alpha_{max}$ = 239° das Zugmittel 2 entsprechend in den Griff hereingezogen wird.

Die Richtung der Austrittsöffnung 7 wird nun so gewählt, daß sie mit der Richtung des Zugmittels 2 übereinstimmt, die es direkt außerhalb der Längsführung einnimmt, wenn der Griff 3 in eine mittlere Stellung

$$\alpha_m = \frac{\alpha_0 + d_{max}}{2}$$

gedreht wird. So wird eine geringe Umlenkung des Zugmittels im gesamten Drehbereich erreicht.

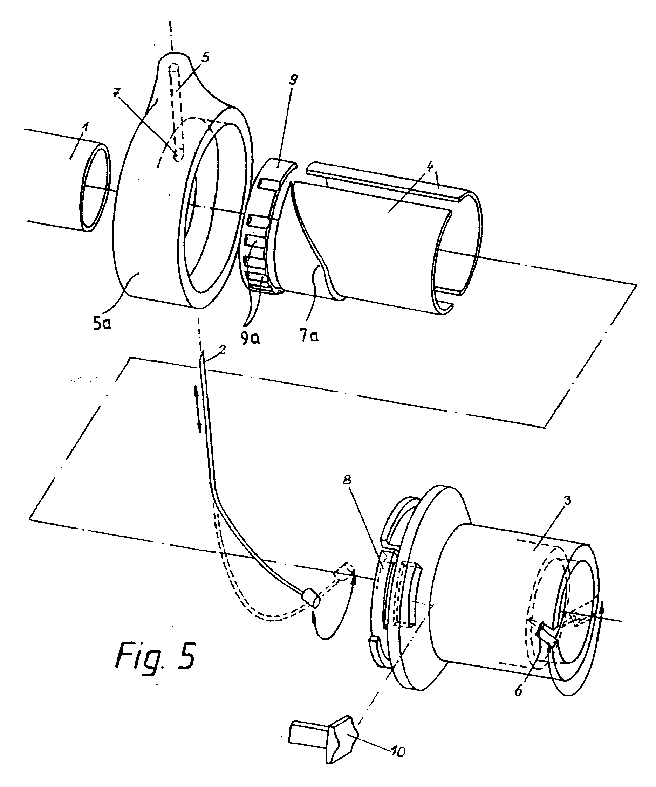

Weiterer Einfluß auf die Umsetzung der Drehin eine Längsbewegung wird genommen, indem die Lage des Zugmittels 2 zwischen der Austrittsöffnung 7 aus der Längsführung 5 und der Befestigungsstelle 6 am Griff 3 zwangsweise durch mechanische Elemente, an denen das Zugmittel zumindest teilweise anliegt, beeinflußt wird. Dazu können sowohl Elemente eingesetzt werden, die sich mit dem Griff 3 mitdrehen als auch welche, die bezogen auf den Lenker 1 ortsfest sind. In Fig. 5 ist ein solches Element auf der Hülse 4 dargestellt und mit der Bezugsziffer 7a bezeichnet. Die Hülse 4 ist in diesem Fall gegen Verdrehen am ringförmigen Körper 5a festgelegt.

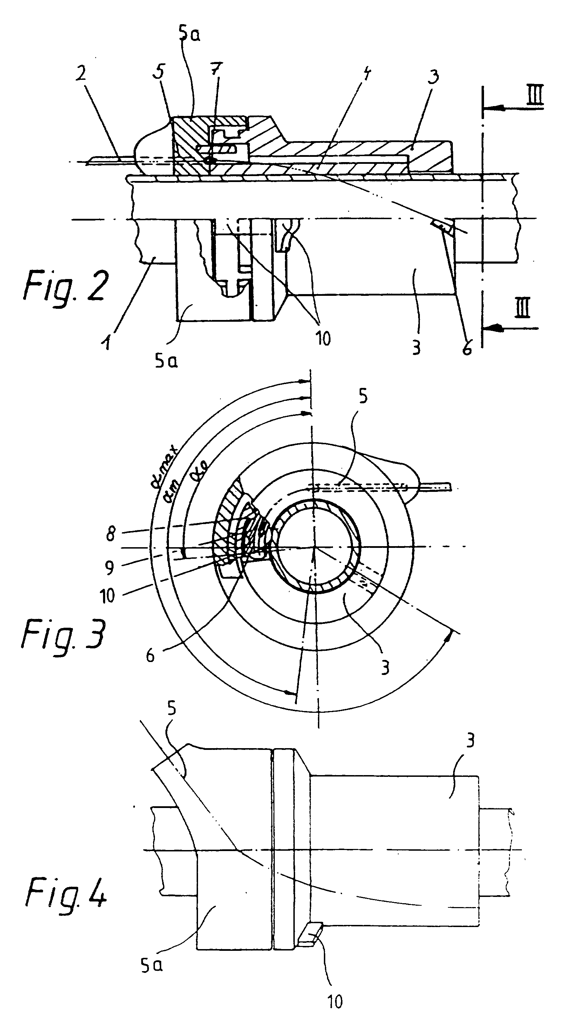

Der Drehgriff 3 wird durch eine Rasterung in der jeweiligen Stellung für eine Schaltstufe der Gangschaltung fixiert. Dazu ist ein Rastsegment 9 vorgesehen (Fig. 3 und 5), das am ringförmigen Körper 5a festgelegt ist. Die Haltekraft der Rasterung und die benötigte Betätigungskraft zum Überwinden der Rasterung ist einstellbar, indem die Rastfeder 8 als gebogene Blattfeder ausgeführt ist und ein verstellbares Widerlager 10 den Bereich, in dem die Blattfeder sich frei biegen kann, einschränkt (Fig. 3 und 5). Durch Verschieben des Widerlagers 10 wird so der frei federnde Bereich der Rastfeder 8 und somit deren Haltekraft verändert. Die Rastfeder 8 ist in Drehrichtung am Griff 3 festgelegt und so angeordnet, daß das Widerlager 10, das ebenfalls im Griff 3 geführt ist, zur Betätigung gut zugänglich ist. Das Widerlager kann aber auch an einem Ring befestigt und auf dem Griff 3 gelagert sein. Der Ring kann an seiner Außenfläche kleine Aussparungen aufweisen, durch die er leicht verstellt werden kann.

Die Rastflächen 9a der Rasterung werden auf dem leicht auszuwechselnden Rastsegment 9 angeordnet, so daß durch einfaches Austauschen dieses Bauelements unterschiedliche Rasterungen für unterschiedliche Gangschaltungen eingebaut werden können. So können für Drehgriffe für den vorderen Umwerfer der Schaltung und für solche für den hinteren Umwerfer der Schaltung bis auf das Rastsegment 9 mit den Rastflächen gleiche Spritzgußteile verwendet werden.

Durch Teilen einiger Bauteile, die sich aufgrund ihrer Abmessungen nicht auf gebogene Lenker schieben lassen, so z.B. der Hülse 4 (Fig. 5), wird eine Montage der Drehgriffe auch auf gebogenen Lenkern ermöglicht. Weitere Vorteile dieser Lösung liegen in dem geringen Umschlingungswinkel des Zugmittels 2 um den Lenker 1 bzw. die Hülse 4 und der damit geringen Reibung, sowie darin, daß das Zugmittel in einem im Verhältnis zu anderen Lösungen größeren Radius, also weniger stark gebogen wird.

**Patentansprüche**

1. Schaltvorrichtung mit einem drehbaren Griff (3) zur Betätigung von Fahrradgangschaltungen über ein am Griff (3) befestigtes Zugmittel (2) durch Umsetzen der Drehbewegung des Griffs (3) in eine Längsbewegung des Zugmittels (2) in einer zugeordneten Längsführung (5) gegen die Kraft zumindest einer Feder, wobei die Längsführung an einem Halter, z. B. Fahrradlenker (1), fixierbar ist und als Anschlag für den Griff (3) dient, wobei weiterhin die Befestigungsstelle (6) des Zugmittels (2) am Griff (3) beim Betätigen des Griffes sich auf einer Kreisbahnkurve oder kreisbahnähnlichen Kurve um die Drehachse des Griffs (3) so bewegt, dass das Zugmittel (2) zwischen einer Austrittsöffnung (7) der Längsführung (5) und seiner Befestigungsstelle (6) am Griff (3) ähnlich einer Schraubenlinie um den Fahrradlenker (1) oder eine ihn ummantelnde Hülse (4) gelenkt wird, wobei die Punkte der Kurve von der Austrittsöffnung (7) des Zugmittels (2) aus seiner Längsführung (5) einen in Richtung der Drehachse des Griffs (3) so großen Abstand aufweisen, dass der durch Drehen des Griffs (3) von der Befestigungsstelle (6) entlang der Kurve zurückgelegte Weg deutlich größer ist als der Weg des Zugmittels (2) an der Austrittsöffnung (7) aus der Längsführung (5),
**dadurch gekennzeichnet, dass**
die Längsführung (5) an einem ringförmigen Körper (5a) befestigt ist, der seinerseits am Fahrradlenker (1) fixiert ist,
dass die Richtung der Längsführung (5) an der Austrittsöffnung (7) so gewählt ist, dass sie mit der Richtung des Zugmittels (2) direkt außerhalb des Austritts aus der Längsführung (5) etwa übereinstimmt, wenn der Griff (3) um einen mittleren Winkel ($\alpha_m = (\alpha_0 + \alpha_{max}) / 2$) in Betätigungsrichtung gedreht ist.

2. Schaltvorrichtung nach Anspruch 1,
**dadurch gekennzeichnet, daß** die Befestigungsstelle (6) des Zugmittels (2) am Griff (3) zu Beginn der Betätigung, wenn das Zugmittel (2) am Beginn seiner Zugbewegung ist, außerhalb einer durch die Austrittsöffnung (7) parallel zur Drehachse des Griffs (3) verlaufenden Gerade in Betätigungsrichtung angeordnet ist.

3. Schaltvorrichtung nach Anspruch 2,
**dadurch gekennzeichnet, daß** die Befestigungsstelle (6) bei Beginn der Betätigung bereits um $\alpha_0$ = ca. 104° in Betätigungsrichtung um die Drehachse des Griffs (3) verdreht ist und um etwa 135° bis zum Erreichen von $\alpha_{max}$ = 239° für die (z.B. für 7 Gänge) erwünschte Zugmittelbewegung verstellbar ist.

4. Schaltvorrichtung nach einem der vorhergehenden Ansprüchen,
**dadurch gekennzeichnet, daß** die Lage des Zugmittels (2) zwischen der Befestigungsstelle (6) und der Austrittsöffnung (7) zwangsweise durch mechanische Formelemente, an der das Zugmittel (2) zumindest teilweise anliegt, veränderbar ist.

5. Vorrichtung nach einem der vorhergehenden Ansprüchen,
**dadurch gekennzeichnet, daß** der Griff (3) durch eine Rasterung (Rastsegment 9) in der jeweiligen Stellung für eine Schaltstufe fixierbar ist.

6. Schaltvorrichtung nach einem der vorhergehenden Ansprüchen,
**dadurch gekennzeichnet, daß** die Halte- und Betätigungskraft der Rasterung veränderbar ist,

7. Schaltvorrichtung nach Anspruch 6,
**dadurch gekennzeichnet, daß** als Rastfeder (8) eine gebogene Blattfeder verwendet wird, bei der der frei federnde Bereich durch ein bewegliches Widerlager (10) veränderbar ist.

8. Schaltvorrichtung nach einem der vorhergehenden Ansprüchen,
**dadurch gekennzeichnet, daß** die Rastflächen (9a) der Rasterung auf einem leicht auswechselbaren Rastsegment (9) angeordnet sind, das für verschiedene Fahrradgangschaltungen entsprechend austauschbar ist.

9. Schaltvorrichtung nach einem der vorhergehenden Ansprüchen,
**dadurch gekennzeichnet, daß** die Bauteile, die nicht auf einen gebogenen Lenker schiebar sind, längs oder quer zur Schieberichtung geteilt und so aneinander befestigbar sind, daß sie auch auf einen gebogenen Lenker schiebbar sind.

**Claims**

1. A gear-changing device comprising a rotatable handle (3) for operating bicycle gear-change systems via a tension means (2) fastened to the handle (3) by changing the direction of rotation of the handle (3) into a longitudinal movement of the tension means (2) in an associated longitudinal guide (5) against the force of at least one spring, wherein the longitudinal guide is fastenable to a holder, for example a bicycle handlebar (1), and serves as an abutment for the handle (3), wherein also, when the handle is operated, the place (6) where the tension means (2) is fastened to the handle (3) moves on a circular or near-circular curve around the axis of rotation of the handle (3) so that the tension means (2) is guided approximately in a helical line around the handlebar (1) or a surrounding sleeve (4) between an outlet opening (7) of the longitudinal guide (5) and the place (6) where the tension means is fastened to the handle (3), wherein the points on the curve from the outlet opening (7) of the tension means (2) out of its longitudinal guide (5) are spaced apart in the direction of the axis of rotation of the handle (3) at a distance such that the distance travelled by rotating the handle (3) from the fastening place (6) along the curve is appreciably greater than the distance travelled by the tension means (2) on the outlet opening (7) out of the longitudinal guide (5), **characterised in that** the longitudinal guide (5) is secured on a ring body (5a) which is fixed on the handlebar (1) and the direction of the longitudinal guide (5) on the outlet opening (7) is chosen so that it approximately coincides with the direction of the tension means (2) directly outside the outlet from the longitudinal guide (5), when the handle (3) is rotated by an average angle ($\alpha_m = (\alpha_0 + \alpha_{max})/2$) in the direction of operation.

2. A gear-changing device according to claim 1, **characterised in that** at the beginning of operation, when the tension means (2) is at the beginning of its motion under tension, the place (6) where the tension means (2) is fastened to the handle (3) is disposed outside a straight line extending in the direction of operation through the outlet opening (7) parallel to the axis of rotation of the handle (3).

3. A gear-changing device according to claim 2, **characterised in that** at the beginning of operation the fastening place (6) is already rotated by $\alpha_0$ = about 104° in the direction of operation around the axis of rotation of the handle (3) and is adjustable by about 135° for the required motion of the tension means (for example for seven gears) until $\alpha_{max}$ = 239°.

4. A gear-changing device according to any of the preceding claims, **characterised in that** the position of the tension means (2) between the fastening place (6) and the outlet opening (7) is automatically variable by mechanical shaped elements against which the tension means (2) at least partly abuts.

5. A device according to any of the preceding claims, **characterised in that** the handle (3) is fastenable by a stop means (stop segment 9) in each position for a gear stage.

6. A gear-changing device according to any of the preceding claims, **characterised in that** the holding and actuating force of the stop means is variable.

7. A gear-changing device according to claim 6, **characterised in that** a stop spring (8) in the form of a bent leaf spring is used, wherein the freely resilient region is variable by a movable abutment (10).

8. A gear-changing device according to any of the preceding claims, **characterised in that** the stop surfaces (9a) of the stop means are disposed on an easily interchangeable stop segment (9) which can be changed as required for different bicycle gear-changing means.

9. A gear-changing device according to any of the preceding claims, **characterised in that** the components which are not movable along a bent handlebar are divided longitudinally or transversely relative to the direction of movement and can be fastened to one another so that they can also be moved on a bent handlebar.

## Revendications

1. Dispositif de commutation comprenant une poignée tournante (3) pour actionner un changement de vitesses de bicyclette par un moyen de traction (2) fixé à la poignée (3), par transformation du mouvement de rotation de la poignée (3) en un mouvement longitudinal du moyen de traction (2) dans un guide longitudinal (5), associé, contre la force développée par au moins un ressort, le guide longitudinal étant bloqué sur un support par exemple le guidon (1) du vélo, et sert de butée pour la butée (3), et en outre le point de fixation (6) du moyen de traction (2) sur la poignée (3) se déplace lors de l'actionnement de la poignée sur une trajectoire circulaire ou une courbe analogue à une trajectoire circulaire autour de l'axe de rotation de la poignée (3) pour que le moyen de traction (2) soit guidé entre un orifice de sortie (7) du guide longitudinal (5) et son point de fixation (6) sur la poignée (3), de façon analogue à une ligne hélicoïdale autour du guidon (1) ou d'une gaine (4) entourant celui-ci, et les points de la courbe entre l'orifice de sortie (7) du moyen de traction (2) de son guide longitudinal (5) ayant une distance dans la direction de l'axe de rotation (3) tellement grande que la course parcourue le long de la courbe par le point de fixation (6) lors de la rotation de la poignée (3) est significativement plus grande que la course du moyen de traction (2) au niveau de l'orifice de sortie (7) du guide longitudinal (5),
**caractérisé en ce que**
le guide longitudinal (5) est fixé à un corps annulaire (5a) lui-même fixé au guidon (1) et la direction du guide longitudinal (5) au niveau de l'orifice de sortie (7) est choisie pour correspondre sensiblement à la direction du moyen de traction (2) directement à l'extérieur de la sortie du guide longitudinal (5) lorsque la poignée (3) est tournée d'un angle moyen $(\alpha_m = (\alpha_0 + \alpha_{max})/2)$ dans la direction d'actionnement.

2. Dispositif de commutation selon la revendication 1, **caractérisé en ce que** le point de fixation (6) du moyen de traction (2) sur la poignée (3) au début de la manoeuvre, lorsque le moyen de traction (2) est au début de son mouvement de traction, se trouve en dehors d'une droite passant par l'orifice de sortie (7), parallèlement à l'axe de rotation de la poignée (3), dans la direction d'actionnement.

3. Dispositif de commutation selon la revendication 2, **caractérisé en ce que** le point de fixation (6) au début de l'actionnement est déjà tourné de $\alpha_0$ = (environ) 104° dans la direction d'actionnement autour de l'axe de rotation de la poignée (3) et d'environ 135° jusqu'à atteindre l'angle $\alpha_{max}$ = 239° pour le mouvement souhaité du moyen de traction (par exemple pour 7 rapports de vitesse).

4. Dispositif de commutation selon l'une quelconque des revendications précédentes, **caractérisé en ce que** la position du moyen de traction (2) entre le point de fixation (6) et l'orifice de sortie (7) est variable nécessairement par des éléments de forme mécaniques contre lesquels le moyen de traction (2) s'applique au moins en partie.

5. Dispositif de commutation selon l'une quelconque des revendications précédentes, **caractérisé en ce que** la poignée (3) est bloquée pour un rapport de vitesse par un encliquetage (segment d'encliquetage 9) dans la position respective.

6. Dispositif de commutation selon l'une quelconque des revendications précédentes, **caractérisé en ce que** la force de retenue et d'actionnement du moyen d'encliquetage est variable.

7. Dispositif de commutation selon la revendication 6, **caractérisé en ce que** le ressort d'encliquetage (8) est un ressort lame cintré, dont la zone à élasticité libre est variable par un appui mobile (10).

8. Dispositif de commutation selon l'une quelconque des revendications précédentes, **caractérisé en ce que** les surfaces d'encliquetage (9a) du moyen d'encliquetage sont prévues sur un segment d'encliquetage (9) facile à remplacer, et qui peut être échangé en fonction des différents changements de vitesses de vélo.

9. Dispositif de commutation selon l'une quelconque des revendications précédentes, **caractérisé en ce que** les pièces qui ne peuvent être emmanchées sur un guidon cintré, sont divisées longitudinalement ou transversalement à la direction d'engagement et sont fixées les unes aux autres pour pouvoir se glisser sur un guidon cintré.

Fig. 1

Fig. 2

Fig. 3

Fig. 4

*Fig. 5*